# EUROPEAN PATENT APPLICATION

(11) **EP 3 470 454 A1**
(43) Date of publication of application: **17.04.2019**
(21) Application number: 18186231.9
(22) Date of filing: 30.07.2018
(51) Int. Cl.: C08H 7/00, C08L 97/00

(54) **METHOD FOR MANUFACTURING PURIFIED LIGNIN COMPOSITE MATERIAL AND PRODUCT THEREOF**

(30) Priority: 01.08.2017 TW 10625963
(71) Applicant: Lai, Chih Chin, 111 Taipei City (TW)
(72) Inventor: Lai, Chih Chin, 111 Taipei City (TW)
(74) Representative: Viering, Jentschura & Partner mbB Patent- und Rechtsanwälte

(57) **Abstract**

A method for manufacturing a purified lignin composite material and a product thereof are disclosed. The method includes a raw material preparation procedure for preparing a powder material; a lignin purification procedure, the powder material being processed into a pure lignin powder; and a lignin mixing procedure, the pure lignin powder being mixed with starch and a binder to produce the purified lignin composite material. The purified lignin contained in the purified lignin composite material has high thermal stability, low water absorption property, a small gap with the adhesive interface of the binder, and strong polymerization ability. Thus, the purified lignin composite material can be used to replace plant fiber composite materials for product production, which can significantly improve the water resistance, high temperature resistance and strength of the product.

## Description

### FIELD OF THE INVENTION

The present invention relates to a method for manufacturing a purified lignin composite material and a product thereof, which can replace plastic materials and plant fiber composite materials, and is non-toxic, harmless, safe, recyclable and environmentally friendly, and has heat thermal stability and strong polymerization ability.

### BACKGROUND OF THE INVENTION

With the social progress and rapid development of industry and commerce, daily life products such as plastic materials that cause environmental pollution do bring convenience to human life, but it is accompanied by a rapid deterioration of environmental quality, and even increasingly affects or threatens human health. Therefore, the research or development of environmentally friendly composite materials that can replace plastic materials has been a major focus of the industry to solve the above problems. Taiwan Patent No. 572817 discloses "method for manufacturing a naturally decomposable container". A pulverized natural bio-fiber powder is mixed with an additive (such as PVA glue) to form a raw material, and then the raw material is placed into a mold and heated at a temperature of 60-300°C to form a finished container. Taiwan Patent No. 1367234 discloses "plant fiber composite material and composition, manufacturing method and application thereof". Pulverized and refined plant fibers are mixed with a bio-polymerization additive and heated at a temperature of 90-120°C and granulated into a granular plant fiber composite material or manufactured into a platy plant fiber composite material, which can be produced by injection molding and blow molding, respectively. The above two conventional plant fiber composite materials can replace plastic materials as the materials for environmentally friendly products. However, the plant fiber particles or powder is directly mixed with the additive (PVA glue) or bio-polymerization additive. Due to the large gap of the adhesive interface between the bundles of the plant fibers and the additive, the polymerization ability is weak. Poor stability during molding results in a decrease in product strength or affects the product yield. Besides, the cellulose and hemicellulose contained in plant fibers are less heat-resistant/temperature-resistant. In long-term hot and humid environments, it may absorb water and get wet and moldy. Even though the above-mentioned conventional plant fiber composite materials contribute to environmental protection and human health, various products such as containers and utensils in the market must have quality conditions such as resistance to falling, washing, and high temperature resistance in order to be repeatedly used. The above-mentioned conventional plant fiber composite materials don't fully meet the requirements. Accordingly, the inventor of the present invention has devoted himself based on his many years of practical experiences to solve these problems.

### SUMMARY OF THE INVENTION

The primary object of the present invention is to provide a method for manufacturing a purified lignin composite material, comprising a raw material preparation procedure, a lignin purification procedure, and a lignin mixing procedure.

In the raw material preparation procedure, a vegetable material containing lignin is performed with a drying process, treated to a moisture content of 15% or less, and performed with a crushing process and a pulverizing process to form a powder material having a fineness of 20 to 500 µm.

In the lignin purification procedure, the powder material is put into a reaction tank and added with soft water of 10 times by weight of the powder material and a fiber hydrolytic enzyme of 1-2 thousandths by weight of the powder material for performing a fiber hydrolysis saccharification treatment. Cellulose and hemicellulose contained in the powder material are decomposed into saccharide dissolved in water to form a saccharide aqueous solution containing solid lignin. Yeast of 1-2 thousandths by weight of the powder material is added for performing a fermentation treatment. The saccharide aqueous solution containing solid lignin is fermented into a fermentation aqueous solution containing solid lignin and ethanol. The solid lignin is partially separated by a solid-liquid separation treatment and performed with an oven-drying process to produce a pure lignin powder.

The lignin mixing procedure is based on an overall weight ratio. The pure lignin powder having a weight ratio of 30-70%, starch having a weight ratio of 0-30% and a binder having a weight ratio of 20-50% are put into a mixer for performing a stirring and mixing process to produce the purified lignin composite material.

The purified lignin contained in the purified lignin composite material has high thermal stability, low water absorption property, a small gap with the adhesive interface of the binder, and strong polymerization ability. Thus, the purified lignin composite material can be used to replace plant fiber composite materials for product production, which can significantly improve the water resistance, high temperature resistance and strength of the product.

Preferably, the vegetable material of the raw material preparation procedure is a woody plant and/or herbaceous plant containing lignin. The woody plant and/or herbaceous plant is selected from the group consisting of vine, straw, bamboo, sawdust, bagasse, corn cob, rice husk, palm husk, peanut shell and a combination thereof, so that a variety of agricultural waste can be reused.

Preferably, in the lignin purification procedure, when the powder material is put into the reaction tank and added with the soft water, the water temperature in the reaction tank is first adjusted and controlled to be 50-60°C, and then the fiber hydrolytic enzyme is put into the reaction tank. The fiber hydrolytic enzyme performs the fiber hydrolysis saccharification treatment to the plant fiber contained in the powder material in the reaction tank, and the cellulose and hemicellulose can be decomposed efficiently under suitable saccharification temperature conditions.

Preferably, the saccharide aqueous solution containing solid lignin and ethanol of the lignin purification procedure is performed with a distillation treatment. The ethanol is distilled and collected and then performed with the solid-liquid separation treatment. The ethanol can be used as an edible, chemical or medical purpose to increase the economic yield of the pure lignin powder.

Preferably, the solid-liquid separation treatment of the lignin purification procedure separates the solid lignin from the fermentation aqueous solution. The fermentation aqueous solution is performed with a wastewater treatment. The fermentation aqueous solution can be discharged as waste water under conditions that meet discharge standards.

Preferably, the starch of the lignin mixing procedure is selected from the group consisting of wheat flour, corn flour, potato flour, sweet potato flour, tapioca flour and a combination thereof. The pure lignin powder and the starch can be closely polymerized through the binder, so that the starch can be used as a modifying additive or adjuvant for the pure lignin powder.

Preferably, the binder of the lignin mixing procedure is a natural plant adhesive selected from the group consisting of rosin, dammar resin, copal, sesbania gum, flaxseed gum, and acacia gum. The natural binder has good adhesive adhesion to the pure lignin powder and the polymerization of the pure lignin powder and the starch, so that the purified lignin composite material can be used for product production to provide a good shaping effect.

Preferably, the purified lignin composite material produced by the lignin mixing procedure is further performed with a plate forming process to form a platy purified lignin composite material. The platy purified lignin composite material is allowed to be cut, so that the platy purified lignin composite material can be used in the fields of construction, furniture, and the like as a building material or plate.

Preferably, the purified lignin composite material produced by the lignin mixing procedure is further performed with a granulation process to form a granular purified lignin composite material. The granular purified lignin composite material can be injected to form a product by an injection molding machine, so that the granular purified lignin composite material can replace plastic granular materials and is used as the raw material for injection molding.

Another object of the present invention is to provide a purified lignin composite material product manufactured by the above purified lignin composite material. The purified lignin composite material has the characteristics of high thermal stability, low water absorption property and strong molding polymerization ability, so that the product effectively increase water resistance and high temperature resistance and good strength performance against an external force.

### BRIEF DESCRIPTION OF THE DRAWINGS

FIG. 1 is a flow chart of the method of the present invention; and
FIG. 2 is a flow chart of manufacturing the purified lignin composite material product of the present invention.

### DETAILED DESCRIPTION OF THE PREFERRED EMBODIMENTS

Embodiments of the present invention will now be described, by way of example only, with reference to the accompanying drawings.

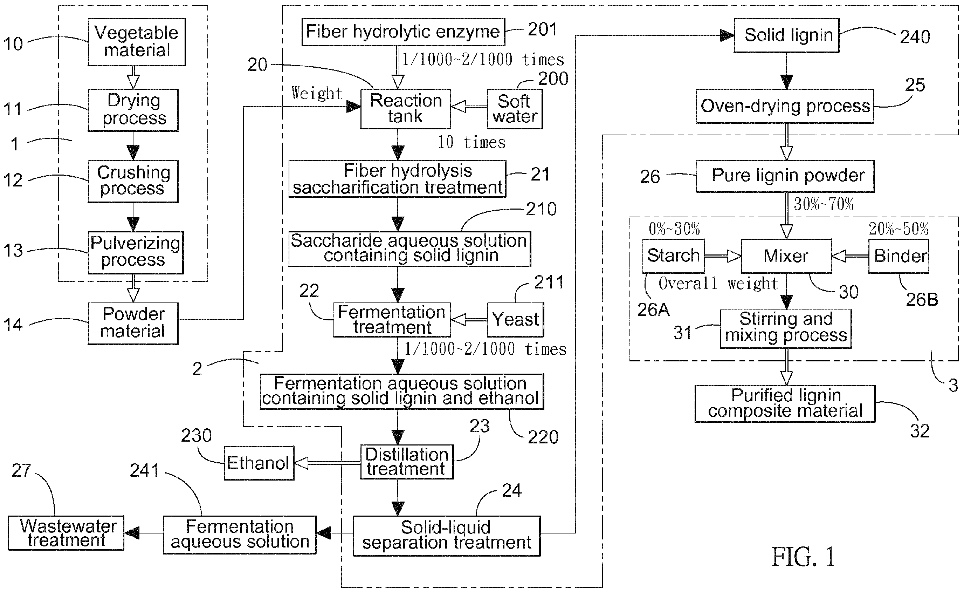

A method for manufacturing a purified lignin composite material, as shown in FIG. 1, comprising a raw material preparation procedure 1, a lignin purification procedure 2, and a lignin mixing procedure 3.

In the raw material preparation procedure 1, a vegetable material 10 containing lignin is provided. A drying process 11 is performed by sunlight exposure or a drying machine. The vegetable material 10 is treated to a moisture content of 15% or less. A crushing process 12 is performed by a crusher, and/or a pulverizing process 13 is performed by a pulverizer for the vegetable material 10 to form a powder material 14 having a fineness of 20 to 500 µm.

In the lignin purification procedure 2, the powder material 14 is put into a reaction tank 20 and added with soft water 200 of 10 times by weight of the powder material 14 and a fiber hydrolytic enzyme 201 of 1-2 thousandths by weight of the powder material 14. (The fiber hydrolytic enzyme produced by Novozyme or Genencor Co., Ltd. may be adopted.) A fiber hydrolysis saccharification treatment 21 is performed for about 40 to 50 hours, and the cellulose and hemicellulose contained in the powder material 14 are decomposed into saccharide dissolved in water to form a saccharide aqueous solution containing solid lignin 210. Next, yeast 211 (for example, yeast for making wine) of 1-2 thousandths by weight of the powder material 14 is added. A fermentation treatment 22 (the fermentation temperature is about 35-40°C) is performed for about 40-50 hours, and the saccharide aqueous solution containing solid lignin 210 is fermented into a fermentation aqueous solution containing solid lignin and ethanol 220. Wet solid lignin 240 is partially separated by a solid-liquid separation treatment 24 (for example, by a filter screen of a solid-liquid separation device and/or a pressing method). An oven-drying process 25 is performed by a dryer to produce a pure lignin powder 26.

The lignin mixing procedure 3 is based on the overall weight ratio. The pure lignin powder 26 having a weight ratio of 30-70%, starch 26A having a weight ratio of 0-30% and a binder 26B having a weight ratio of 20-50% are put into a mixer 30 for performing a stirring and mixing process 31 to produce a purified lignin composite material 32.

The purified lignin contained in the purified lignin composite material 32 has high thermal stability, low water absorption property, a small gap with the adhesive interface of the binder, and strong polymerization ability. Thus, the purified lignin composite material can be used to replace the existing plant fiber composite materials for product production, which can significantly improve the water resistance, high temperature resistance and strength of the product.

According to the above embodiment, as shown in FIG. 1, the vegetable material 10 of the raw material preparation procedure 1 is a woody plant and/or herbaceous plant containing lignin. The woody plant and/or herbaceous plant is selected from the group consisting of vine, straw, bamboo (chip), sawdust, bagasse, corn cob, rice husk, palm husk, peanut shell and a combination thereof, so that a variety of agricultural waste can be reused.

According to the above embodiment, as shown in FIG. 1, in the lignin purification procedure 2, when the powder material 14 is put into the reaction tank 20 and added with the soft water 200, the water temperature in the reaction tank 20 is first adjusted and controlled to be 50-60°C, and then the fiber hydrolytic enzyme 201 is put into the reaction tank 20. The fiber hydrolytic enzyme 201 performs the fiber hydrolysis saccharification treatment 21 to the plant fiber contained in the powder material 14 in the reaction tank 20, and the cellulose and hemicellulose can be decomposed efficiently under suitable saccharification temperature conditions.

According to the above embodiment, as shown in FIG. 1, the saccharide aqueous solution 220 containing solid lignin and ethanol in the lignin purification procedure 2 is performed with a distillation treatment 23. The ethanol 230 is distilled and collected and then performed with the solid-liquid separation treatment 24. The ethanol 230 can be used as an edible, chemical or medical purpose to increase the economic yield of the pure lignin powder 26.

According to the above embodiment, as shown in FIG. 1, the solid-liquid separation treatment 24 of the lignin purification procedure 2 separates the solid lignin 240 from the fermentation aqueous solution 241. The fermentation aqueous solution 241 is performed with a wastewater treatment 27. The fermentation aqueous solution 241 can be discharged as waste water under conditions that meet discharge standards.

According to the above embodiment, as shown in FIG. 1, the starch 26A of the lignin mixing procedure 3 is selected from the group consisting of wheat flour, corn flour, potato flour, sweet potato flour, tapioca flour and a combination thereof. The pure lignin powder 26 and the starch 26A can be closely polymerized through the binder 26B, so that the starch 26A can be used as a modifying additive or adjuvant for the pure lignin powder 26.

According to the above embodiment, as shown in FIG. 1, the binder 26B of the lignin mixing procedure 3 is a natural plant adhesive selected from the group consisting of rosin, dammar resin, copal, sesbania gum, flaxseed gum, and acacia gum. The natural binder 26B has good adhesive adhesion to the pure lignin powder 26 and the polymerization of the pure lignin powder 26 and the starch 26A, so that the purified lignin composite material 32 can be used for product production to provide a good shaping effect. The hardness reaches a Rockwell hardness (HRR) of 120 degrees or more.

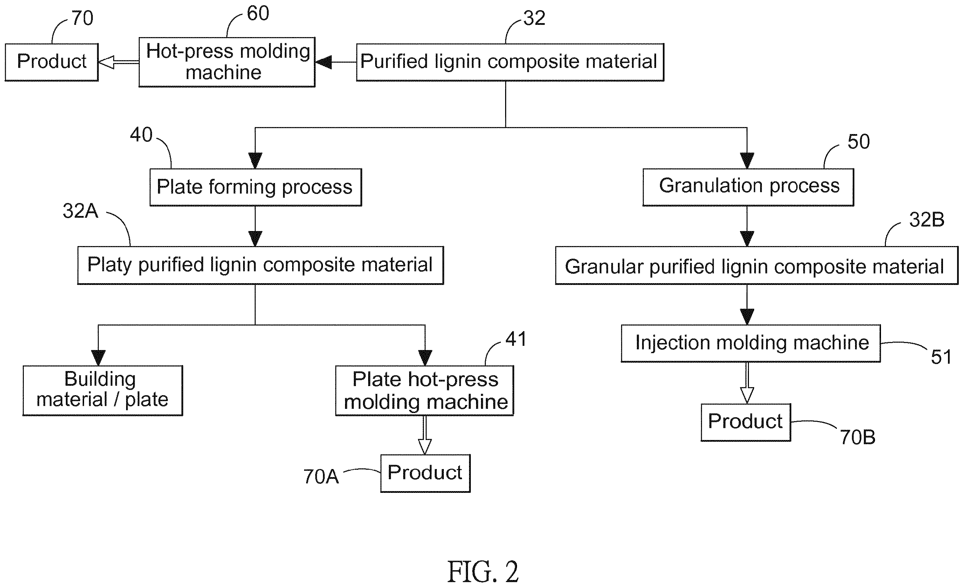

According to the above embodiment, as shown in FIG. 1 and FIG. 2, the purified lignin composite material 32 produced by the lignin mixing procedure 3 is further performed with a plate forming process 40. The purified lignin composite material 32 is heated and pressed by a plate making machine to form a platy purified lignin composite material 32A. The platy purified lignin composite material 32A is allowed to be cut, so that the platy purified lignin composite material 32A can be used in the fields of construction, furniture, and the like as a building material or plate.

According to the above embodiment, as shown in FIG. 1 and FIG. 2, the purified lignin composite material 32 produced by the lignin mixing procedure 3 is further performed with a granulation process 50 by a granulator to form a granular purified lignin composite material 32B. The granular purified lignin composite material 32B can be injected to form a product by an injection molding machine 51, so that the granular purified lignin composite material 32B can replace plastic granular materials and is used as the raw material for injection molding.

According to the above various embodiments, the present invention provides a purified lignin composite material product. As shown in FIG. 1 and FIG. 2, the purified lignin composite material 32 is heated in a forming mold of a hot press molding machine 60 to form a product 70 which is press-formed at a temperature of 60-200°C. The platy purified lignin composite material 32A is heated in a forming mold of a plate hot press molding machine 41 to form a product 70A which is press-formed at a temperature of 60-200°C. The granular purified lignin composite material 32B is in a forming mold of the injection molding machine 51 to be injected at a temperature of 60-200°C to form a product 70B. The purified lignin composite material 32, the platy purified lignin composite material 32A and the granular purified lignin composite material 32B all have the characteristics of high thermal stability, low water absorption property and strong molding polymerization ability, so that the products 70, 70A, 70B effectively increase water resistance and high temperature resistance and good strength performance against an external force. Taking the granular purified lignin composite material 32B as an example, the bowl product 70B which is formed by the injection molding machine 51 is sent to the SGS inspection organization for detection. (The sample to be tested is tested according to the inspection standard of plastic food containers. Therefore, the test part is named "beige plastic bowl".) From the "Plasticizer Test (not detected)" report in Annex 1 and the "Formaldehyde Residue Test (No Residue)" report in Annex 2, it can be confirmed that the sample submitted is a safe, non-toxic and harmless product 70B. From the "Dishwasher Test" report in Annex 3, the "Heat tolerance (120°C) Test" report in Annex 4 and the "Cold Resistance (-20°C) Test" report in Annex 5, it can be further confirmed that the sample submitted is a washable, heat-resistant and cold-resistant product 70B.

Although particular embodiments of the present invention have been described in detail for purposes of illustration, various modifications and enhancements may be made without departing from the spirit and scope of the present invention. Accordingly, the present invention is not to be limited except as by the appended claims.

## Claims

1. A method for manufacturing a purified lignin composite material, comprising a raw material preparation procedure, a lignin purification procedure, and a lignin mixing procedure;
in the raw material preparation procedure, a vegetable material containing lignin being performed with a drying process and treated to a moisture content of 15% or less and performed with a crushing process and a pulverizing process to form a powder material having a fineness of 20 to 500 µm;
in the lignin purification procedure, the powder material being put into a reaction tank and added with soft water of 10 times by weight of the powder material and a fiber hydrolytic enzyme of 1-2 thousandths by weight of the powder material for performing a fiber hydrolysis saccharification treatment, cellulose and hemicellulose contained in the powder material being decomposed into saccharide dissolved in water to form a saccharide aqueous solution containing solid lignin, yeast of 1-2 thousandths by weight of the powder material being added for performing a fermentation treatment, the saccharide aqueous solution containing solid lignin being fermented into a fermentation aqueous solution containing solid lignin and ethanol, the solid lignin being partially separated by a solid-liquid separation treatment and performed with an oven-drying process to produce a pure lignin powder;
the lignin mixing procedure being based on an overall weight ratio, the pure lignin powder having a weight ratio of 30-70%, starch having a weight ratio of 0-30% and a binder having a weight ratio of 20-50% being put into a mixer for performing a stirring and mixing process to produce the purified lignin composite material.

2. The method as claimed in claim 1, wherein the vegetable material of the raw material preparation procedure is a woody plant and/or herbaceous plant containing lignin, and the woody plant and/or herbaceous plant is selected from the group consisting of vine, straw, bamboo, sawdust, bagasse, corn cob, rice husk, palm husk, peanut shell and a combination thereof.

3. The method as claimed in claim 1, wherein in the lignin purification procedure, when the powder material is put into the reaction tank and added with the soft water, a water temperature in the reaction tank is first adjusted and controlled to be 50-60°C, and then the fiber hydrolytic enzyme is put into the reaction tank.

4. The method as claimed in claim 1, wherein the saccharide aqueous solution containing solid lignin and ethanol of the lignin purification procedure is performed with a distillation treatment, and the ethanol is distilled and collected and then performed with the solid-liquid separation treatment.

5. The method as claimed in claim 1, wherein the solid-liquid separation treatment of the lignin purification procedure separates the solid lignin from the fermentation aqueous solution, and the fermentation aqueous solution is performed with a wastewater treatment.

6. The method as claimed in claim 1, wherein the starch of the lignin mixing procedure is selected from the group consisting of wheat flour, corn flour, potato flour, sweet potato flour, tapioca flour and a combination thereof.

7. The method as claimed in claim 1, wherein the binder of the lignin mixing procedure is a natural plant adhesive selected from the group consisting of rosin, dammar resin, copal, sesbania gum, flaxseed gum, and acacia gum.

8. The method as claimed in claim 1, wherein the purified lignin composite material produced by the lignin mixing procedure is further performed with a plate forming process to form a platy purified lignin composite material.

9. The method as claimed in claim 1, wherein the purified lignin composite material produced by the lignin mixing procedure is further performed with a granulation process to form a granular purified lignin composite material.

10. A purified lignin composite material product, manufactured by the purified lignin composite material as claimed in any one of claims 1-9.
